# EUROPEAN PATENT SPECIFICATION

(11) **EP 2 959 426 B1**
(45) Date of publication and mention of the grant of the patent: **30.10.2019**
(21) Application number: 14754346.6
(22) Date of filing: 19.02.2014
(51) Int. Cl.: G06F 21/62, G06F 9/54, H04W 12/08, H04L 29/06

(54) **PERMISSION-BASED UPDATING OF CONTACT INFORMATION**
ERLAUBNISBASIERTE AKTUALISIERUNG VON KONTAKTINFORMATIONEN
MISE À JOUR D'INFORMATIONS DE CONTACT SUR LA BASE D'UNE PERMISSION

(30) Priority: 19.02.2013 US 201361766390 P
(43) Date of publication of application: 30.12.2015
(73) Proprietor: Gold, Barry, Hopkinton, MA 01748 (US); Sallick, Karen, Westport, CT 06880 (US)
(72) Inventor: Gold, Barry, Hopkinton, MA 01748 (US); Sallick, Karen, Westport, CT 06880 (US)
(74) Representative: Berggren Oy, Helsinki & Oulu
(86) International application number: PCT/US2014/017089
(87) International publication number: WO 2014/130524

(56) References cited:
- EP-A2- 1 193 587
- US-A1- 2006 229 063
- US-A1- 2007 266 118
- US-B1- 6 275 824
- US-B1- 7 243 097

## Description

### Claim of Priority

This application claims priority of the U.S. utility application number 14/183,837 filed on February 19, 2014 and U.S. provisional patent application number 61/766,390 filed on February 19, 2013.

### Field of the Invention

The invention relates to systems and methods for automatically updating personal contact information accessible via an electronic communications device, and more particularly, to systems and methods of updating information while respecting user privacy protocols and stipulations.

### Background of the Invention

Electronic personal communications devices such as, but not limited to, smart phones and tablet computers, frequently have, or have access to, databases of contact information typically tailored to the user of the device. Such databases are very useful, but often contain incomplete or inaccurate records as some, or all, of a contact's information may change over time. Updating such databases may need to be an ongoing task, and may be tedious and time consuming when done manually. Automated contact information updating apps and services are therefore desirable. Users of such services may, however, be concerned about their privacy. They may, for instance, not want their wireless phone numbers or email addresses known to other people without their permission.

The present invention addresses these issues and concerns by providing a system and method for automatically updating a database of personal contact information, while providing privacy and security protocols so that a subscriber's privacy choices are respected related to highly sensitive information like wireless phone numbers and email addresses.

### Description of the related art:

The relevant prior art wiring includes:

US Patent no. 7,940,910 issued to Chatterjee, et al. on May 10, 2011 entitled "Directory integration in mobile systems" that describes embodiments for generating a sorted integrated directory. The sorted integrated directory integrates contacts from disparate directories into a common directory. The formation of the integrated directory includes receiving contacts from multiple directories. The contacts represent or are formed under multiple data structures, with one data structure corresponding to one of the directories. The received contacts are converted into contact objects. The contact objects, each of which represents a contact, all include or are formed under a common data structure. An integrated directory is generated or formed from the contact objects. The integrated directory thus includes a set of contacts of the disparate source directories.

US Patent no. 7,660,857 issued to Smith, et al. on February 9, 2010 entitled "Systems and methods for automatically updating electronic mail access lists" that describes a system and method for accepting a recipient identifier, wherein the recipient identifier can be used to identify an electronic mail (email) recipient; generating a petition based on the recipient identifier and at least one petition rule, wherein the at least one petition rule includes at least one of: 1) a sender identification method; and 2) a recipient; and wherein the petition can be used by a email provider to allow a recipient to receive email from a sender.

US Patent no. 8,131,569 issued to Maresh, et al. on March 6, 2012 entitled "Methods, systems, and devices for modifying medical files" that describes methods, systems, and devices for managing, transferring, modifying, converting and/or tracking medical files and/or medical system messages. In certain embodiments, the foregoing may generally be based on requesting medical files at a first medical facility, identifying the requested medical files at a second medical facility, initiating a secure network connection between the first and second medical facility, modifying a header portion of the medical files based on patient identification information created by the first medical facility, and other processing steps.

US Patent no. 7,822,189 issued to Rana, et al. on October 26, 2010 entitled "Searching multiple directories and generating a sorted integrated directory" that describes embodiments for searching multiple directories. The searching includes remote searching and local searching. Local searching is performed against the local integrated phonebook on a client device. In contrast, remote searching is performed against one or more directories or directory types of an enterprise server (e.g. corporate directory, etc.). The local directory on the client device therefore effectively functions like a cache of information of one or more of the directories of the enterprise server, where the cache is stored locally on the client device. US 2007/0266118 A1 discloses a contact management system which uses serial numbers to identify contact records in a server and to update contact records in a local contact database using the identified contact records.

Various implements are known in the art, but fail to address all of the problems solved by the invention described herein. Various embodiments of this invention are illustrated in the accompanying drawings and will be described in more detail herein below.

The invention is defined by the appended claims.

### Summary of the Invention

The present invention relates to systems and methods for automatically updating databases of personal contact information such as, but not limited to, the databases commonly associated with electronic communications devices, including mobile communications devices.

A method for automatically updating a database of personal contact information on an end-user electronic communications device having the steps of providing a manager server having programmed instructions for automatically controlling a server database, said database comprising a plurality of contact data elements, one or more of said contact data elements being obtained from a data-owner programmed app operative on a contact data-owner electronic communications device via said manager server and wherein one or more of said contact data elements comprises a preferred privacy protocol selected via said contact data-owner electronic communications device; receiving a request, from an end-user programmed app operative on said end-user electronic communications device, for one or more of said contact data elements stored on said server database, said contact data element being identified by a known data element of said data-owner contact data elements; automatically applying, by said manager server, said preferred privacy protocol of said requested communications data element; and if said preferred privacy protocol allows, automatically supplying, by said server manager, a requested contact data element to said programmed app operative on said end-user electronic communications device.

In a preferred embodiment, a server that may be located "in the cloud" may automatically control or contain a database of contacts. The database may, for instance, contain contact or locator data elements such as, but not limited to, people and/or company names, addresses, telephone numbers, email addresses, company or private URLs, or some combination thereof.

Some or all of these database elements may have been obtained from an owner of the data via a programmed app that may be operative on an electronic communications device. In such an instance, the data element may also contain, or be associated with, a preferred privacy protocol. Such a preferred privacy protocol may, for instance, include instructions such as, but not limited to, never share my wireless phone number, only share my email address with my permission, or some combination thereof. Where the data owner's permission may be required for sharing, the server may automatically request that permission via an electronic means such as, but not limited to, an email, a voicemail, an SMS message, or some combination thereof.

In a preferred embodiment, when the manager server receives a request from an end-user, or from a programmed app operative on their electronic communications device, the server may automatically apply any such privacy protocol associated with the requested data element. Such a request may, for instance, take the form of a contact's known email address and be a request for their wireless phone number. Only if the protocol allows will the requested data be supplied.

It is an object of the present invention to provide an automated service for end-users to update their contact databases while maintaining the privacy of data owners.

Yet another object of the present invention is to provide a contact update service that automatically maintains correct information.

Still another object of the present invention is to automate the task of updating contact information while allowing the end-user to maintain control of which contact information is updated.

### Brief Description of the Drawings

**Fig. 1** shows a schematic overview of a preferred embodiment of the present invention.
**Fig. 2** shows a schematic flow diagram indicating various steps that may be used in a preferred embodiment of the present invention.

### Description of the Preferred Embodiments

The preferred embodiments of the present invention will now be described with reference to the drawings. Identical elements in the various figures are identified with the same reference numerals.

Reference will now be made in detail to embodiments of the present invention. Such embodiments are provided by way of explanation of the present invention, and are not intended to be limited thereto. In fact, those of ordinary skill in the art may appreciate upon reading the present specification and viewing the present drawings that various modifications and variations can be made thereto.

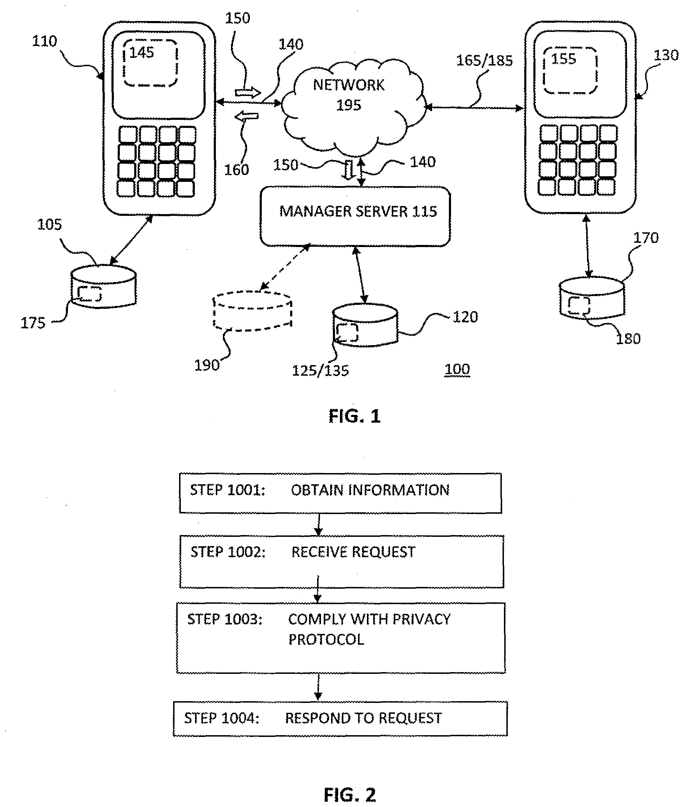

Figure 1 shows a schematic overview of a preferred embodiment of the present invention, which in may be a system 100 for automatically updating a database of personal contact information that may be part of, or accessible to an end-user.

In a preferred embodiment, the end-user may have an end-user electronic communications device 110 that may be running an end-user programmed app 145. The end-user app 145 may, for instance, be programmed so as to automatically examine one or more personal contact information records 175. Where the app locates an element that may be missing or outdated, on the end-users personal contact information database 105, the app may then automatically establish contact with a manager server 115 that may have access to a more comprehensive and/or up-to-date database 120 of contact data elements 125.

A contact record may, for instance, contain locator data elements such as, but not limited to, a record identifier, a contact's first name, a contact's last name, a company name, a contact's mobile phone number, work phone number, home phone number, email address, street or mailing address, city and state of residence, zip or postal code, country of residence or some combination thereof.

A request for further data may, for instance, require sufficient data elements to identify a person such as, but not limited to, data elements such as, but not limited to, a record identifier, a contact's first and last name, a last name and company name, a contact's mobile phone number, work phone number, home phone number, email address, a contact's street or mailing address including city, state or some combination thereof.

The known data elements 150 may be transmitted as part of a request 140 for further data elements. The request may, for instance, be made via an electronic communications network 195 such as, but not limited to, the Internet. On receiving the request, the manager server 115 may then query the server database 120 for a matching record containing the data elements specified in the request 140 and further contact data elements 125. The server database 120 may also find that the contact data elements 125 include, or are associated with, one or more preferred privacy protocols 135.

These preferred privacy protocol 135 may have been supplied by the data owner using a data-owner programmed app 155 running on a contact data-owner electronic communications device 130. The data-owner personal contact information 180 may, for instance, also reside on a data-owner database 170.

A preferred privacy protocol 135 that may have been selected, or specified, by the data-owner when subscribing to automatic updating service may take a number of forms that may depend on specific scenarios.

When requesting information, subscribing to a service or simply updating preferences, a data requester may for instance specify preferences, or limits, on how any requests may be made by the end-user programmed app 145 operative on their end-user electronic communications device 110. These request preferences may include instructions such as, but not limited to, allowing text messages to be sent from the end user, or data requester, phone, allowing emails to be sent from the phone, to never ask how or what to send, or to ask how or what to send on a record by record basis, i.e., for each request, or some combination thereof.

When an end-user, or an end-user programmed app 145 running on the end-user electronic communications device 110 decides to request information, an existing contact may be selected as the one for which more, or more current, information is desired. The end-user may, for instance, already have the contacts email address, but would also like to have their wireless phone number. The end-user programmed app 145 may then send an email or SMS from the end-user electronic communications device 110 to the manager server 115 device requesting the wireless phone number of the contact identified by the known data element 150 that may, for instance, be the known email address, or other known data sufficient to identify the contact. The manager server 115 may then send a permission request email 165 to the data-owner programmed app 155 running on the contact data-owner electronic communications device 130. If the request is allowed, or approved, the data-owner programmed app 155 may then return the requested information or an approval for the manager server 115 to supply the requested information, to the manager server 115. The manager server 115 may then send the requested and approved requested contact data element 160 on to the end-user programmed app 145.

In a second scenario, the end-user may know the contact's wireless phone number and may want to obtain their email address.

The end-user programmed app 145, or the manager server 115, may then send a permission request SMS or text message 185 message to the data-owner programmed app 155 on the contact data-owner electronic communications device 130. The data-owner programmed app 155 may then obtain the requested data-owner personal contact information 180 from the data-owner database 170 either directly to the end-user programmed app 145 or to the manager server 115 for storing on the contact data elements 125 and for forwarding on to the end-user programmed app 145. The data-owner programmed app 155 may instead send authorization to the data-owner programmed app 155 to obtain and send the requested data. The data-owner programmed app 155 may then obtain the requested data from the server database 120 or from a third party database 190, and then send the data to the end-user programmed app 145 on the end-user electronic communications device 110.

When the data-owner programmed app 155 receives a request for data, it may first have the data-owner select or update privacy protocols. The privacy protocols may include instructions such as, but not limited to, to always ask permission to provide a requested email address, to always ask permission to provide a wireless phone number, to always provide a requested email, to always provide a wireless phone number, to never provide a requested email, to never provide a requested wireless phone number or some combination thereof.

In a preferred embodiment, the default privacy protocol may be to always ask permission to provide a requested email address and to always ask permission to provide a wireless phone number.

If no response is received, the request may be repeated a number of times at a later time or date. In a preferred embodiment, if no response is received to a first request, the request is resent 48 hours later. No response to the second request is taken as a "NO" for this particular request only.

In a preferred embodiment, the recipient of the request, i.e., the data owner, may verify the requested information by entering the requested email and/or wireless phone number into an input box and explicitly clicking a button or icon to share the data.

The end-user programmed app 145 may inform the end-user when a responses has been received and may automatically update the contact record or personal contact information 175 on the database 105 of personal contact information.

Figure 2 shows a schematic flow diagram indicating various steps that may be used in a preferred embodiment of the present invention.

In step 1001, the manager server 115 may first obtain data to populate the server database 120 with contact data elements 125. This data may be obtained from one or more third party databases 190, or may be obtained from end-users or subscribers when they join the service, or at periodic time intervals while the end-user is a subscriber to, or a member of, the automatic updating of personal contact information service. When obtaining contact data from an end-user, the manager server 115 may also obtain privacy preferences and/or on how requests emanating from their end-user electronic communications device 110 may be made, as detailed above.

In step 1002, the manager server 115 may receive a request for a contact data element. The request may contain sufficient data to identify the data-owner of the requested data element. The request may be made because the personal contact information 175 on the end-users database 105 of personal contact information may have incomplete data, or data that may be outdated. The end-user programmed app 145 may, for instance, select to automatically check or confirm any data elements that may have been obtained prior to a certain date. In a preferred embodiment, any data that is deemed to be more than 12 months old may be automatically checked for accuracy.

In step 1003, the manager server 115 may comply with any relevant privacy protocol associated with the requested data element. In a preferred embodiment, the default privacy protocol may be to always ask permission to provide a requested email address and to always ask permission to provide a wireless phone number. This default protocol may be changed at any time by the data-owner.

In step 1004, the manager server 115 may after having complied with any applicable protocols, received any required permissions, and obtained any required data, respond to the request by either supplying the requested data to the end-user programmed app 145 or informing the end-user programmed app 145 that the requested data cannot be supplied.

In obtaining requested data, the manager server 115 may consult one or more third party databases 190. These third party databases 190 may be broadly classified as business-to-consumer (B2C) or business-to-business (B2B) databases. In a preferred embodiment, in the event that non-identical responses to the request are found in both a B2C and a B2B database, preference may be given to the data obtained from the B2C database. If non-identical responses are found in similarly classified databases, preference may be given to the most recent data.

In a preferred embodiment, when the end-user programmed app 145 has sent more than one request at any one time, the manager server 115 may first respond by providing the end-user programmed app 145 with data such as, but not limited to, a number of records checked, a number of records matched, a number of possible changes available to be made, or some combination thereof.

The end-user may then use the end-user programmed app 145 to decide which of the available updates to make. This selection may be significant in that the end-user may be charged based on the number of change requests made, or may be limited to making only a certain number of change requests within a certain time period, or some combination thereof.

Once the manager server 115 receives a further request to make one or more of the possible changes, the manager server 115 may then supply the necessary information to make the requested possible changes.

## Claims

1. A method for automatically updating a database of personal contact information on an end-user electronic communications device, comprising:
providing a data-owner and an end-user electronic communication device, wherein each of said data-owner and end-user electronic communication device stores, in a personal contact information database, one or more contact records comprising a plurality of contact data elements;
providing a manager server having programmed instructions for automatically controlling a server database, said database comprising one or more contact records, each contact record comprising a plurality of contact data elements each of the plurality of the contact data elements comprises contact data being selected from the group consisting of a wireless phone number, a city, a zip code, a street address, or an email address;
one or more of said contact data elements being obtained from a data-owner programmed app operative on the data-owner electronic communications device via said manager server and wherein one or more of said obtained contact data elements comprises a preferred privacy protocol selected via said data-owner electronic communications device;
providing an end-user programmed app operative on said end-user electronic communications device being programmed to automatically examine the one or more of said contact records stored in the personal contact information database of the end-user electronic communication device to locate a missing or outdated contact data element in a contact record;
if the end-user programmed app locates a missing or outdated contact data element in a contact record stored in the personal contact information database of the end-user electronic communication device sending, by the end-user programmed app, a request for the missing or outdated contact data element to the manager server, the request contains a plurality of known contact data elements and the missing or outdated contact data element of said contact record;
on receiving the request from the end-user programmed app operative on said end-user electronic communication device by the manager server, querying, by the manager server the server database for the contact record comprising the missing or outdated contact data element, said contact record comprising the missing or outdated contact data element being identified by matching the received plurality of known contact data elements in the request with contact data elements comprised in the one or more contact records stored in the server database;
automatically applying, by said manager server, said preferred privacy protocol of the missing or outdated contact data element of the identified contact record stored in the server database,
if said preferred privacy protocol allows, automatically supplying, by said server manager, the missing or outdated contact data element of the identified contact record from the server database to said end-user programmed app on said end-user electronic communications device.

2. The method of claim 1 wherein said known contact data elements comprising an email address and wherein said preferred privacy protocol comprises automatically generating and sending a permission request email to said data-owner programmed app, said email comprising an identity of said requester, a nature of said contact data element requested, and an allow or disallow option.

3. The method of claim 1 wherein said known contact data elements comprising a phone number and wherein said preferred privacy protocol comprises automatically generating and sending a permission request SMS message to said data owner, said SMS message comprising an identity of said requester, a nature of said contact data element requested, and an allow or disallow option.

4. The method of claim 1 wherein said automatically supplying said requested contact data element further comprises using said known contact data elements to query said database, and wherein said matches in said database are prioritized in order of a phone number match, a name and city match, a name and zip code match and a name and street address match.

5. The method of claim 1 wherein said database of contact database elements further comprises functionality for querying at least one third party database.

6. The method of claim 5 wherein said third party databases comprise at least one B2C contact information database and one B2B contact database, and wherein said automatically supplying further comprises using said known contact data elements to obtain a first matching contact data element from said B2C database and a second matching contact data element from said B2B database and wherein said first matching contact data element is prioritized over said second matching contact data element.

7. The method of claim 1 further comprises receiving a plurality of requests from said programmed app and wherein said server manager responds by providing a number of records checked, a number of records matched and a number of possible changes available to be made on a personal contacts database associated with said end-user electronic communications device.

8. The method of claim 7 further comprising receiving a request to make one or more of said possible changes, and supplying said information to make said requested possible changes.

9. The method of claim 3 wherein said known contact data elements comprising a wireless phone number.

## Patentansprüche

1. Verfahren zur automatischen Aktualisierung einer Datenbank persönlicher Kontaktinformationen in einer Kommunikationsvorrichtung eines Endbenutzers, umfassend:
Bereitstellung einer elektronischen Kommunikationsvorrichtung eines Dateneigentümers und eines Endbenutzers, wobei jede der elektronischen Kommunikationsvorrichtungen des Dateneigentümers und Endbenutzers in einer persönlichen Kontaktinformationsdatenbank einen oder mehr Kontaktsätze speichert, die mehrere Kontaktdatenelemente umfassen;
Bereitstellen eines Managerservers, der programmierte Anweisungen aufweist, um automatisch eine Serverdatenbank zu steuern, wobei die Datenbank einen oder mehr Kontaktsätze aufweist und jeder Kontaktsatz, der mehrere Kontaktdatenelemente aufweist, die jeweils aus den mehreren Kontaktdatenelementen stammen, Kontaktdaten umfasst, die aus der Gruppe gewählt werden, die aus einer Handynummer, einer Stadt, einer Postleitzahl, einer Straße oder einer E-Mail-Adresse bestehen;
wobei ein oder mehrere der Kontaktdatenelemente von einer programmierten App des Dateneigentümers erhalten werden, die auf der elektronischen Kommunikationsvorrichtung des Dateneigentümers über den Managerserver läuft, und wobei ein oder mehr der erhaltenen Kontaktdatenelemente ein bevorzugtes Privatsphärenprotokoll umfassen, das über die elektronische Kommunikationsvorrichtung des Dateneigentümers gewählt wurde;
Bereitstellen einer programmierten App des Endbenutzers, die auf der elektronischen Kommunikationsvorrichtung des Endbenutzers läuft und programmiert ist, automatisch den einen oder die mehreren Kontaktsätze, die in der persönlichen Kontaktinformationsdatenbank der elektronischen Kommunikationsvorrichtung des Endbenutzers gespeichert sind, zu prüfen, um ein fehlendes oder veraltetes Kontaktdatenelement in einem Kontaktsatz zu finden;
wenn die programmierte App des Endbenutzers in einem Kontaktsatz, der in der persönlichen Kontaktinformationsdatenbank der elektronischen Kommunikationsvorrichtung des Endbenutzers gespeichert ist, ein fehlendes oder veraltetes Kontaktdatenelement findet, senden einer Anfrage für ein fehlendes oder veraltetes Kontaktdatenelement durch die programmierte App des Endbenutzers an den Managerserver, wobei die Anfrage mehrere bekannte Kontaktdatenelemente und das fehlende oder veraltete Kontaktdatenelement des Kontaktsatzes umfasst;
bei Empfang der Anfrage von der programmierten App des Endbenutzers, die auf der elektronischen Kommunikationsvorrichtung des Endbenutzers läuft, durch den Managerserver, Abfrage durch den Managerserver an die Serverdatenbank für den Kontaktsatz, der das fehlende oder veraltete Datenelement umfasst, wobei der Kontaktsatz, der das fehlende oder veraltete Datenelement umfasst, durch Abgleich der empfangenen mehreren bekannten Kontaktdatenelemente in der Anfrage mit den Kontaktdatenelementen, die in einem oder mehreren Kontaktsätzen enthalten sind, die auf der Serverdatenbank gespeichert sind, identifiziert wird;
Automatisches Anwenden des bevorzugten Privatsphärenprotokolls des fehlenden oder veralteten Datenelements des identifizierten Kontaktsatzes, der auf der Serverdatenbank gespeichert ist, durch den Managerserver,
wenn das bevorzugte Privatsphärenprotokoll dies erlaubt, automatisches Bereitstellen des fehlenden oder veralteten Datenelements des identifizierten Kontaktsatzes von der Serverdatenbank an die programmierte App des Endbenutzers auf der elektronischen Kommunikationsvorrichtung des Endbenutzers.

2. Verfahren nach Anspruch 1, wobei die bekannten Kontaktdatenelemente eine E-Mail-Adresse umfassen und wobei das bevorzugte Privatsphärenprotokoll das automatische Erzeugen einer Erlaubnisabfrage-E-Mail an die programmierte App des Dateneigentümers umfasst, wobei die E-Mail eine Identität des Anfragers, eine Art des angeforderten Kontaktdatenelements und eine Option zum Erlauben oder Verweigern umfasst.

3. Verfahren nach Anspruch 1, wobei die bekannten Kontaktdatenelemente eine Telefonnummer umfassen und wobei das bevorzugte Privatsphärenprotokoll das automatische Erzeugen einer Erlaubnisabfrage-SMS-Nachricht an den Dateneigentümer umfasst, wobei die SMS-Nachricht eine Identität des Anfragers, eine Art des angeforderten Kontaktdatenelements und eine Option zum Erlauben oder Verweigern umfasst.

4. Verfahren nach Anspruch 1, wobei die automatische Bereitstellung der angeforderten Kontaktdatenelemente ferner umfasst, die bekannten Kontaktdatenelemente zu verwenden, um die Datenbank abzufragen, und wobei die Abgleiche in der Datenbank in der Reihenfolge einer Telefonnummernübereinstimmung, Namens- und Stadtübereinstimmung, Namens- und Postleitzahlenübereinstimmung und Namens- und Straßenadressenübereinstimmung priorisiert sind.

5. Verfahren nach Anspruch 1, wobei die Datenbank der Kontaktdatenbankelemente ferner eine Funktion umfasst, um mindestens eine Drittdatenbank abzufragen.

6. Verfahren nach Anspruch 5, wobei die Drittdatenbank mindestens eine B2C-Kontaktinformationsdatenbann und eine B2B-Kontaktdatenbank umfasst, wobei das automatische Bereitstellen ferner umfasst, bekannte Kontaktdatenelemente zu verwenden, um ein erstes Abgleichskontaktdatenelement von der B2C-Datenbank und ein zweites Abgleichskontaktdatenelement von der B2B-Datenbank zu erhalten, und wobei das erste Abgleichskontaktdatenelement Priorität vor dem zweiten Abgleichskontaktdatenelement genießt.

7. Verfahren nach Anspruch 1, ferner umfassend das Empfangen mehrerer Anfragen von der programmierten App, wobei der Servermanager reagiert, indem er eine Anzahl von geprüften Sätzen, eine Anzahl von abgeglichenen Sätzen und eine Anzahl möglicher verfügbarer Änderungen, die an einer persönlichen Kontaktdatenbank vorgenommen werden können, die mit der elektronischen Kommunikationsvorrichtung des Endbenutzers assoziiert ist, bereitstellt.

8. Verfahren nach Anspruch 7, ferner umfassend das Empfangen einer Anfrage, eine oder mehrere der möglichen Änderungen vorzunehmen und die Informationen bereitzustellen, um die angeforderten möglichen Änderungen vorzunehmen.

9. Verfahren nach Anspruch 3, wobei die bekannten Kontaktdatenelemente eine Handynummer umfassen.

## Revendications

1. Procédé pour mettre à jour automatiquement une base de données d'information de contact de personnel sur un dispositif de communication électronique d'utilisateur final, comprenant de :
fournir un dispositif de communication électronique de propriétaires des données et d'utilisateur final, dans lequel chacun desdits dispositifs de communication électronique de propriétaire des données et d'utilisateur final mémorise, dans une base de données d'information de contact personnel, un ou plusieurs registres de contact comprenant une pluralité d'éléments de contact ;
fournir un serveur gestionnaire ayant des instructions programmées pour commander automatiquement une base de serveur, ladite base de données comprenant un ou plusieurs registres de contact, chaque registre de contact comprenant une pluralité d'éléments de données de contact, chacun de la pluralité d'éléments de contact comprend des données de contact étant sélectionnées dans le groupe composé d'un numéro de téléphone sans fil, une ville, un code postal, une adresse de rue ou une adresse e-mail ;
un ou plusieurs desdits éléments de données de contact étant retenu à partir d'une application programmée de propriétaire des données opérationnelles sur le dispositif de communication électronique de propriétaires des données via ledit serveur gestionnaire et dans lequel un ou plusieurs desdits éléments de contact obtenus comprend un protocole de confidentialité préféré sélectionné via ledit dispositif de communication électronique de propriétaires des données ;
fournir une application programmée d'utilisateur final opérationnel sur le dispositif de communication électronique d'utilisateur final étant programmée pour examiner automatiquement un ou plusieurs desdits registres de contact mémorisés dans la base de données d'information de contact personnel du dispositif de communication électronique d'utilisateur final pour localiser un élément de contact manquant ou obsolète dans un registre de contact ;
si l'application programmée d'utilisateur final localise un élément de données de contact manquant ou obsolète dans un registre de contact mémorisé dans la base de données d'information de contact personnel du dispositif de communication électronique d'utilisateur final, envoyer, par l'application programmée d'utilisateur final, une demande de l'élément de données de contact manquant ou obsolète au serveur gestionnaire, la demande contient une pluralité d'éléments de données de contact connus et l'élément de données de contact manquant ou obsolète dudit registre de contact ;
à la réception de la demande provenant de l'application programmée d'utilisateur final opérationnel sur le dispositif de communication et d'utilisateur final par le serveur gestionnaire, interroger, par le serveur gestionnaire, la base de données de serveur afin d'obtenir le registre de contact comprenant l'élément de données de contact manquant ou obsolète, ledit registre de contact comprenant l'élément de données de contact manquant ou obsolète étant identifié en faisant concorder la pluralité reçue d'éléments de contacts connus dans la demande avec les éléments de données de contact compris dans un ou plusieurs registres de contact mémorisés dans la base de données de serveur ;
appliquer automatiquement, par ledit serveur gestionnaire, ledit protocole de confidentialité préféré de l'élément de données de contact manquant ou obsolète du registre de données de contact identifié mémorisé par la base de données de serveur ;
si ledit protocole de confidentialité préféré le permet, fournir automatiquement, par ledit serveur gestionnaire, l'élément de données de contact manquant ou obsolète du registre de données de contact identifié de la base de données de serveur à ladite application programmée d'utilisateur final sur le dispositif de communication électronique d'utilisateur final.

2. Procédé selon la revendication 1, dans lequel lesdits éléments de données de contacts connus comprennent une adresse email et dans lequel ledit protocole de confidentialité préféré comprend de générer automatiquement et envoyer un e-mail de demande de permission à ladite application programmée de propriétaires des données, ledit e-mail comprenant une identité dudit demandeur, une nature dudit élément de données de contact demandé et une option d'autorisation ou non autorisation.

3. Procédé selon la revendication 1, dans lequel lesdits éléments de données de contacts connus comprennent un numéro de téléphone et dans lequel ledit protocole de confidentialité préféré comprend de générer automatiquement et envoyer un message SMS de de demande d'autorisation audit propriétaire des données, ledit message SMS comprenant une identité dudit demandeur, une nature dudit élément de données de contact demandé et une option d'autorisation ou non autorisation.

4. Procédé selon la revendication 1, dans lequel ladite fourniture automatique dudit élément de données de contact demandé comprend en outre d'utiliser lesdits éléments de données de contact connus pour interroger ladite base de données, et dans lequel lesdites concordances dans la base de données sont classées par priorité dans l'ordre d'une concordance de numéro de téléphone, une concordance de nom et de ville, une concordance de noms et de code postal et une concordance de nom et d'adresse de rue.

5. Procédé selon la revendication 1, dans lequel ladite base de données d'éléments de base de contact comprend en outre une fonctionnalité pour interroger au moins une base de données de tierce partie.

6. Procédé selon la revendication 5, dans lequel ladite base de données de tierce partie comprend au moins une base de données d'information de contact B2C et une base de données de contact B2B, et dans lequel ladite fourniture automatique comprend en outre d'utiliser lesdits éléments de données de contact connus pour obtenir un premier élément de données de contact concordant provenant de ladite base de données B2C et un second élément de données de contact concordant provenant de ladite base de données B2B et dans lequel ledit premier élément de données de contact concordant est classé par priorité au-dessus du second élément de données de contact concordant.

7. Procédé selon la revendication 1, comprenant en outre de recevoir une pluralité de demandes provenant de ladite application programmée et dans lequel ledit serveur gestionnaire répond en fournissant un nombre de registres vérifiés, un nombres de registres concordants et un nombre de changements possibles disponibles à effectuer sur une base de données de contact personnel associée au dispositif de communication électronique d'utilisateur final.

8. Procédé selon la revendication 7, comprenant en outre de recevoir une demande pour effectuer un ou plusieurs desdits changements possibles et fournir ladite information afin d'effectuer lesdits changements possibles demandés.

9. Procédé selon la revendication 3, dans lequel lesdits éléments de données de contacts connus comprennent un numéro de téléphone sans fil.
